(19) **Europäisches Patentamt**

**European Patent Office**

**Office européen des brevets**

(11) **EP 0 665 483 B1**

(12) **EUROPÄISCHE PATENTSCHRIFT**

(45) Veröffentlichungstag und Bekanntmachung des Hinweises auf die Patenterteilung:
**16.01.2002 Patentblatt 2002/03**

(51) Int Cl.⁷: **G05F 1/67**, H02M 3/335

(21) Anmeldenummer: **94116891.6**

(22) Anmeldetag: **26.10.1994**

(54) **Einrichtung zur selbsttätigen Einstellung eines optimalen Arbeitspunktes für den Betrieb eines Verbrauchers an einer Spannungsquelle**

Apparatus for the automatic adjustment of the optimum working point for the operation of a consumer at a voltage source

Dispositif pour l'ajustement automatique du point de fonctionnement optimal pour l'operation d'un utilisateur d'une source de tension

(84) Benannte Vertragsstaaten:
**AT CH ES FR GB LI NL**

(30) Priorität: **22.12.1993 DE 4343822**

(43) Veröffentlichungstag der Anmeldung:
**02.08.1995 Patentblatt 1995/31**

(73) Patentinhaber: **ROBERT BOSCH GMBH**
**70442 Stuttgart (DE)**

(72) Erfinder: **Reustle, Hans**
**D-71546 Aspach (DE)**

(74) Vertreter: **Gleiss & Grosse**
**Maybachstrasse 6 A**
**70469 Stuttgart (DE)**

(56) Entgegenhaltungen:
**EP-A- 0 090 212        EP-A- 0 205 630**
**US-A- 4 899 269**

**Beschreibung**

Die Erfindung betrifft ein Verfahren zur selbsttätigen Einstellung eines optimalen Arbeitspunktes für den Betrieb eines Verbrauchers an einer Spannungsquelle und eine Einrichtung zu dessen Durchführung. Dabei wird als optimaler Arbeitspunkt derjenige Arbeitspunkt bezeichnet, der den Betrieb des Verbrauchers mit maximaler Leistung erlaubt. Die Spannungsquelle steht dort über einen Schaltregler mit einem Verbraucher in Verbindung.

Eine solche Einrichtung ist bekannt aus der US 4,899,269. Dort ist ein Schwellwertdetektor für die Spannung und den Strom der Versorgungsspannungsquelle vorgesehen. Eine Vergleichseinheit stellt die Abweichung der Schaltregler-Ausgangsspannung von einem Referenzwert fest. Diese Abweichung wird mittels einer Umschalteinrichtung abwechselnd invertierend und nichtinvertierend auf einem Integrationskondensator geführt. Die Umschalteinrichtung wird über den Schwellwertdetektor gesteuert. Das Ausgangssignal des Integrationskondensators wird mit einem Sägezahnsignal verglichen und in Abhängigkeit dieses Vergleiches wird die Einschaltzeit des Schaltregler-Stellgliedes gesteuert.

Aufgabe der vorliegenden Erfindung ist es, den Schaltungsaufwand zu vereinfachen und die Zuverlässigkeit zu erhöhen. Diese Aufgabe wird durch das Verfahren des Patentanspruchs 1 bzw. die Einrichtung des Patentanspruchs 2 gelöst. Die Unteransprüche zeigen vorteilhafte Ausgestaltungen auf.

Im Gegensatz zur Einrichtung gemäß US 4,899,269 erfolgt die Steuerung der Umschalteinrichtung nicht durch einen aufwendigen Schwellwertdetektor, der außerdem gleitend ausgebildet sein muß. Vielmehr ist nur erforderlich, das Tastverhältnis des Stellgliedes zu modulieren und synchron dazu die Abweichung der Schaltregler-Ausgangsspannung bzw. des -Ausgangsstromes periodisch umzuschalten. Die Abweichung der Ausgangsspannung bzw. des Ausgangsstromes wird synchron zur Modulation des Tastverhältnisses / der Pulsfrequenz abwechselnd invertierend und nichtinvertierend auf das Integrationsglied geführt. Bei Leistungsoptimum ist demzufolge die Spannung am Integrationsglied Null, ansonsten positiv oder negativ. In Abhängigkeit dieser Tendenz wird das Tastverhältnis / die Pulsfrequenz des Schaltregler-Stellgliedes so lange nachgestellt, bis das Leistungsoptimum erreicht wird. Die Einrichtung der Erfindung benötigt keine Kenntnis der Eigenschaften der Spannungsquelle, insbesondere deren Innenwiderstand, zur selbsttätigen Einstellung des optimalen Arbeitspunktes.

Anhand der Zeichnungen wird die Erfindung nun näher erläutert. Es zeigen:

Fig. 1 ein Prinzipschaltbild einer Einrichtung nach der Erfindung,
Fig. 2 ein Diagramm zur Einstellung des optimalen Arbeitspunktes,
Fig. 3 Puls-Zeit-Diagramme zur Korrektur des Tastverhältnisses,
Fig. 4 die Umschalteinrichtung im Zusammenspiel mit dem Taktgenerator und
Fig. 5 eine Einrichtung gemäß der Erfindung mit Einsatz bei einem Flußwandler.

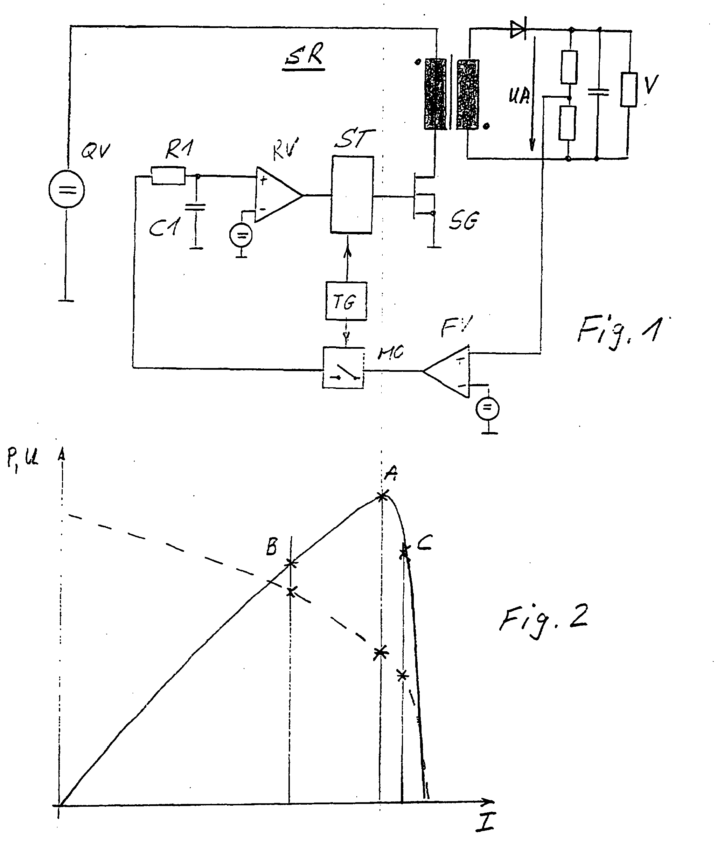

In Fig. 1 ist ein Prinzipschaltbild einer Einrichtung nach der Erfindung dargestellt. Eine Spannungsquelle QV steht in Wirkverbindung zu einem Verbraucher V über einen Schaltregler SR mit einem Stellglied SG in Form eines Schalttransistors. Der Schaltregler SR wird so betrieben, daß der optimale Arbeitspunkt für den Betrieb des Verbrauchers V an der Spannungsquelle QV selbsttätig eingestellt wird. Zur Erreichung des optimalen Arbeitspunktes, z.B. zur Optimierung der der Spannungsquelle QV maximal entnehmbaren Leistung P, wird das Tastverhältnis des Ansteuersignals für das Stellglied SG, welches von der Steuereinrichtung ST erzeugt wird, mit dem Taktsignal eines Taktgenerators TG moduliert und die Reaktion des Schaltreglers SR auf diese durch die Modulation erzwungene Tastverhältnisänderung ausgewertet. In Abhängigkeit dieser Reaktion erfolgt eine definierte Beeinflussung - Nachstellung - des Tastverhältnisses des Ansteuersignals, bis das Leistungsoptimum erreicht ist. Die Erfassung der Reaktion kann unter anderem durch Erfassen des Differenzsignals der Schaltreglerausgangsspannung $\Delta UA$, des Differenzsignals des Schaltreglerausgangsstromes $\Delta IA$ oder der Schaltreglerausgangsleistung $\Delta PA$ - Verknüpfen der Differenzsignal von Schaltreglerausgangsspannung und -strom - erfolgen. Beim Ausführungsbeispiel nach Fig. 1 wird die Schaltreglerausgangsspannung über einen Spannungsteiler erfaßt, einem Fehlerverstärker FV zugeleitet und das Differenzsignal $\Delta UA$ einer Umschalteinrichtung MO zugeleitet. Die Umschalteinrichtung MO die ebenfalls vom Taktgenerator TG gesteuert wird, führt das Differenzsignal $\Delta UA$ synchron zur Modulation des Tastverhältnisses des Ansteuersignals für das Stellglied abwechselnd invertiert und nichtinvertiert auf ein Integrationsglied R1, C1. Bei Leistungsoptimum ist die Spannung am Integrationsglied R1, C1 gleich Null, ansonsten entweder positiv oder negativ.

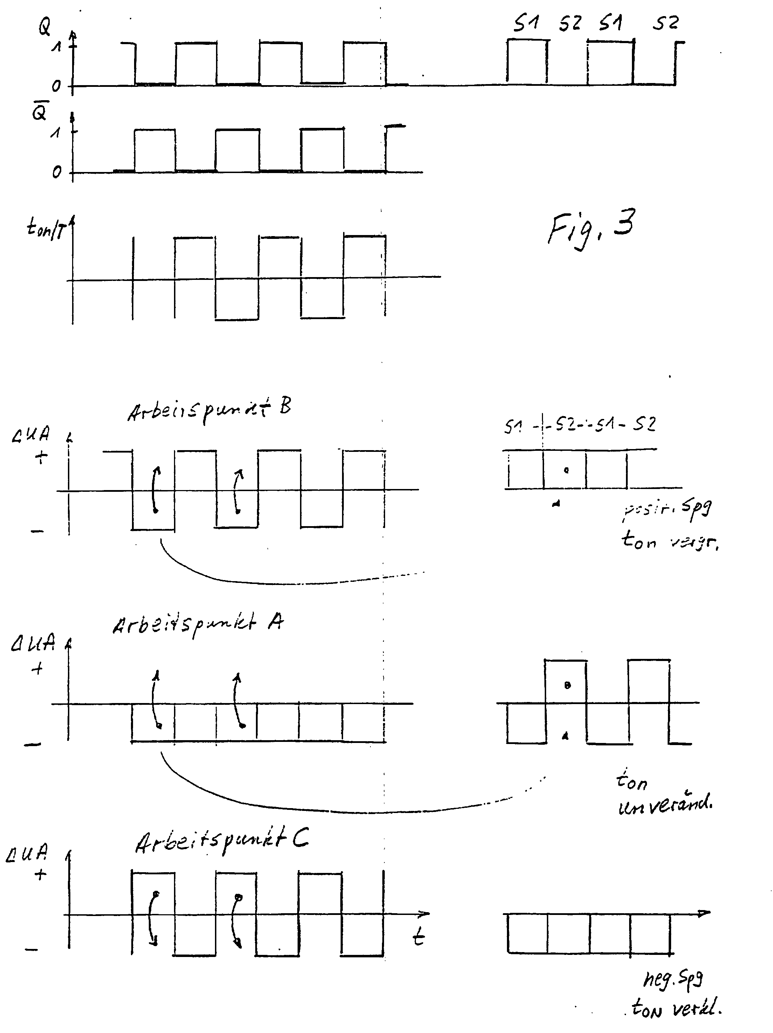

Fig. 2 zeigt beispielhaft die Abhängigkeit der Leistung P (durchgezogene Linie) bzw. der Eingangsspannung U (gestrichelt) vom Strom I. Bei Leistungsoptimum (Arbeitspunkt A) kann das Tastverhältnis $t_{on}/T$, das durch den Oszillator der Steuereinrichtung ST vorgegeben wird, unverändert beibehalten werden (Fig. 3). Ist die Spannung am. Integrierglied R1, C1 positiv (Arbeitspunkt B), muß die Einschaltzeit $t_{on}$ vergrößert werden. Bei negativer Spannung am Integrierglied R1, C1 (Arbeitspunkt C) ist $t_{on}$ zu verkleinern.

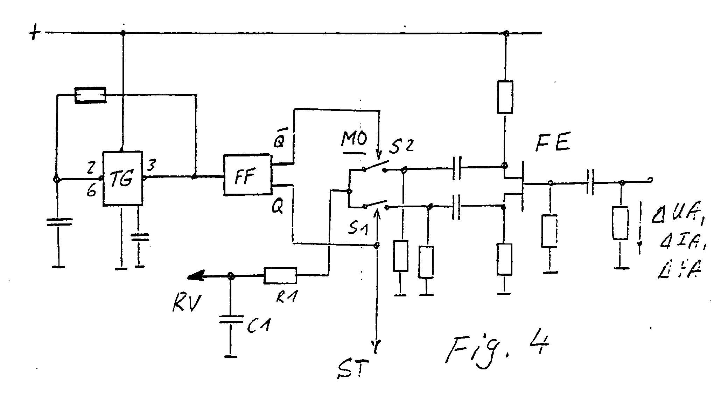

Fig. 4 zeigt eine mögliche Ausgestaltung der Umschalteinrichtung MO im Zusammenspiel mit dem Taktgenerator TG. Das Differenzsignal $\Delta UA$, bzw. $\Delta Ia$ oder $\Delta PA$ wird einem Feldeffekttransistor FE gateseitig zugeführt. An Drain und Source dieses Feldeffekttransistors wird das verstärkte Differenzsignal einmal invertierend und einmal nichtinvertierend abgenommen und jeweils einem Schalter S1 bzw. S2 zugeführt. Die Schalter werden vom Ausgangssignal des Taktgenerators TG über ein Flip-Flop FF gesteuert und zwar der Schalter S1 über den Q-Ausgang und der Schalter S2 über den $\overline{Q}$-Ausgang (Fig. 3). Das Signal am Integrierglied R1, C1 wirkt über den Regelverstärker RV je nach seinem Vorzeichen verkürzend oder verlängernd auf das Tastverhältnis wie zuvor beschrieben ein.

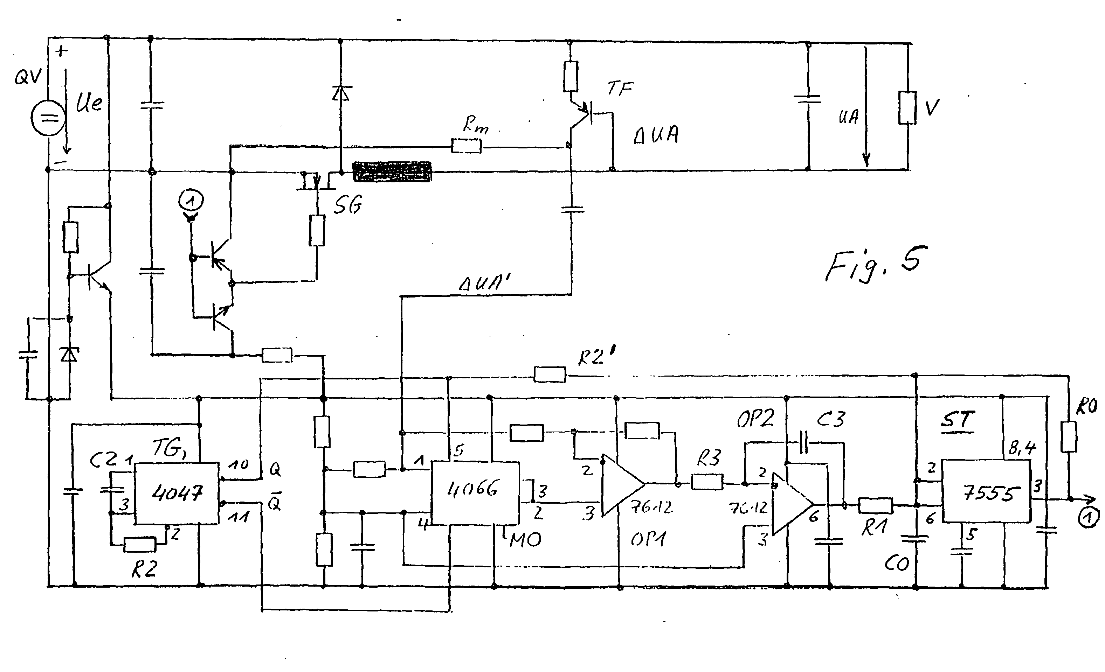

Fig. 5 zeigt eine Schaltung nach der Erfindung für einen Flußwandler als Schaltregler. Die Erfassung des Differenzsignals ΔUA erfolgt hier über den Transistor TF, der ein Signal ΔUA' bezogen auf -Ue (Schaltreglereingangsspannung) erzeugt. Das Differenzsignal Δ UA' wird der Umschalteinrichtung MO - hier mit einem vierfach Analogschalter IC des Typs 4066 realisiert - über dessen Pin 1 zugeführt. Als Taktgenerator TG ist ein IC des Typs 4047 eingesetzt mit den frequenzbestimmenden Elementen R2, C2. Der IC 4047 enthält bereits das in Fig. 4 dargestellte Flip-Flop, so daß er am Ausgang 10 den Q-Ausgang und der Ausgang 11 den $\overline{Q}$-Ausgang darstellt.

Dieser Q-Ausgang führt sowohl zum Schalteingang 5 des Analogschalters MO als auch zur Steuereinrichtung ST, die unter Verwendung des Timer IC 7555 realisiert ist. In der dargestellten Beschaltung arbeitet der Timer IC als freischwingender Oszillator mit den frequenzbestimmenden Mitteln RO, CO. Die Widerstände R2' und R1 beeinflussen die Oszillatorfrequenz in geringem Umfang mit. Die Oszillatorfrequenz wird auf beispielsweise 50 kHz eingestellt. Über den Widerstand R2' wird der Oszillator an Pin 2, 6 mit der Frequenz des Taktgenerators TG moduliert, z.B. mit 200 Hz. Der Analogschalter MO arbeitet zusammen mit dem Operationsverstärker OP1 als Inverter / Nichtinverter, gesteuert durch den Taktgenerator TG, so daß an dessen Ausgang, Pin 6, die phasenrichtigen, invertierten bzw. nichtinvertierten ΔU'-Impulse meßbar sind. Der Operationsverstärker OP2 integriert diese Impulse und vergleicht sie mit dem Referenzsignal an Pin 4 des Analogschalters MO, so daß am Ausgang, Pin 6, vom Operationsverstärker OP2 das verstärkte Differenzsignal ansteht. Das Integrationsverhalten wird durch den Widerstand R3 und den Kondensator C3 bestimmt. Das Differenzsignal wird über den Widerstand R1 so auf Pin 2, 6 der Steuereinrichtung ST zugeführt, daß das Tastverhältnis im richtigen Sinn beeinflußt wird. Der Aufbau des IC 7555 ist zahlreichen Applikationsschriften oder z.B. auch der EP 205 630 B1 entnehmbar. Sein Schwellwertverhalten wird durch die Spannung am Pin 2, 6 bestimmt. Die untere Schaltwelle wird erreicht, wenn die Spannung am Kondensator CO auf einen Wert von 1/3 UH (UH = Versorgungsspannung des IP 7555) absinkt. Dann führt der Ausgang 3 H-Potential und der Stellglied-Transistor SG wird über eine Gegentakttransistorstufe leitend gesteuert. Die obere Schaltschwelle ist bei 2/3 UH erreicht. Der Ausgang 3 führt dann L-Potential. Das Tastverhältnis $t_{on}$/T stellt sich entsprechend dem Erreichen dieser Schwellwerte ein, und wird so über die Widerstände R1 und R2 an Pin 2, 6 pulsbreitenmoduliert. Führt der Ausgang des Operationsverstärkers OP2 eine negative Spannung über den Widerstand R1, wird vom Knoten an Pin 2, 6 des IC 7555 Strom abgezogen. Die untere Schaltschwelle wird früher erreicht und demzufolge der Stellglied-Schalttransistor SG kürzer eingeschaltet. Auf diese Weise wird das Tastverhältnis je nach Reaktion (Änderung der Differenzgröße ΔUA, ΔIA, ΔPA) auf die erzwungene Modulation des Tastverhältnisses nachgestellt, bis der optimale Arbeitspunkt (Differenzspannung am Eingang des Operationsverstärkers OP2 = 0) erreicht ist. Zur Modulation des Tastverhältnisses kann alternativ die Einschaltzeit $t_{on}$ bei konstanter Ausschaltzeit oder die Ausschaltzeit bei konstanter Einschaltzeit verändert werden. Ebenso kann die Pulsfrequenz verändert werden.

Die Einrichtung gemäß der Erfindung eignet sich inbesondere für die maximale Energieentnahme aus Solarzellen, z.B. in Satelliten-Stromversorgungen, oder bei der Versorgung von Verbrauchern auf Fernspeisestrecken, z.B. Regeneratoren oder Einrichtungen der Leittechnik, mit unbekannten Leitungswiderständen.

## Patentansprüche

1. Verfahren zur selbsttätigen Einstellung eines optimalen Arbeitspunktes, der den Betrieb eines Verbrauchers mit maximaler Leistung an einer Spannungsquelle erlaubt, die über einen Schaltregler (SR) mit einem Verbraucher (V) in Wirkverbindung steht, mit folgenden Schritten:

   - Modulieren (MO) des Tastverhältnisses des Ansteuersignals für das Stellglied (SG) des Schaltreglers (SR) mit dem Taktsignal eines Taktgenerators (TG) durch abwechselnd positive und negative Pulse vorgegebener Länge,

   - Auswerten der Reaktion des Schaltreglers (SR) auf diese durch die Modulation erzwungene Tastverhältnisänderung durch:

      a. Ermitteln des Differenzsignals (ΔUA, ΔIA, ΔPA) der Schaltregler-Ausgangsspannung (UA) und/oder des Schaltregler-Ausgangsstromes (IA) von einem statischen Referenzsignal mittels einer Vergleichseinheit (FV),

      b. Zuführen des ermittelten Differenzsignals synchron zur Modulation des Tastverhältnisses des Ansteuersignals für den Schaltregler (SG) abwechselnd invertiert und nichtinvertiert auf ein Integrationsglied (R1, C1),

c. Nachstellen des Tastverhältnisses des Ansteuersignals in Abhängigkeit der Polarität der Spannung am Integrationsglied (R1, C1), d.h. Vergrößern der Einschaltzeit für den Schaltregler (SG), wenn die Spannung am Integrationsglied (R1, C1) positiv ist, und Verkleinern der Einschaltzeit für den Schaltregler (SG), wenn die Spannung am Integrationsglied (R1, C1) negativ ist, so lange bis die Spannung am Integrationsglied (R1, C1) den Wert Null erreicht und damit der optimale Arbeitspunkt eingestellt ist.

2. Einrichtung zur Durchführung des Verfahrens nach Anspruch 1, mit folgenden Einheiten:

- einer Vergleichseinheit (FV) zum Feststellen des Differenzsignals (ΔUA, ΔIA, ΔPA),

- einer Steuereinrichtung (ST) zur Aufbereitung eines Ansteuersignals für das Schaltregler-Stellglied (SG) mit vorgebbarem Tastverhältnis,

- einem Taktgenerator (TG), welcher abwechselnd positive und negative Pulse vorgegebener Länge erzeugt und welcher so mit der Steuereinrichtung (ST) in Wirkverbindung steht, däss das Tastverhältnis des Ansteuersignals vom Taktgenerator (TG) modulierbar ist,

- einer Umschalteinrichtung (MO), welche von den Ausgangspulsen des Taktgenerators so steuerbar ist, dass das Differenzsignal (ΔUA, ΔIA, ΔPA) abwechselnd invertiert und nichtinvertiert an einem Integrationsglied (IG) erscheint,

- einer Wirkverbindung vom Integrationsglied (IG) zur Steuereinrichtung (ST), welche eine Beeinflussung des Tastverhältnisses und/oder der Pulsfrequenz des Ansteuersignals für das Stellglied (SG) derart ermöglicht, dass die Abweichung vom Sollwert minimal wird.

3. Einrichtung nach Anspruch 2, **dadurch gekennzeichnet, dass** die Umschalteinrichtung (MO) aus zwei parallel zueinander angeordneten Schaltern (S1, S2) besteht, dass der Taktgenerator (TG) ausgangsseitig mit einem Flip-Flop (FF) beschaltet ist, dessen komplementäre Signalausgänge mit den Steuereingängen der Schalter (S1, S2) verbunden sind.

4. Einrichtung nach einem der Ansprüche 2 oder 3, **dadurch gekennzeichnet, dass** die Steuereinrichtung (ST) einen Oszillator enthält, der über frequenzbestimmende Mittel (R0, C0) und eine Schwellwertschaltung das Ansteuersignal mit vorgebbarem Tastverhältnis erzeugt, dass die frequenzbestimmenden Mittel (R0, C0) zur Modulation des Tastverhältnisses mit dem Taktgenerator (TG) sowie zur Nachstellung dieses Tastverhältnisses mit dem Ausgang des Integrationsgliedes (IG) verbunden sind.

5. Einrichtung nach einem der Ansprüche 2 bis 4, **dadurch gekennzeichnet, dass** die Umschalteinrichtung (MO) zusammen mit einem in Kette geschalteten Operationsverstärker (Op1) als Inverter / Nichtinverter für das Differenzsignal (ΔUA, ΔIA, ΔPA) dient.

6. Einrichtung nach einem der Ansprüche 2 bis 5, **dadurch gekennzeichnet, dass** ein Operationsverstärker (Op2) vorgesehen ist, welcher so beschaltet ist, dass er gleichzeitig als Integrationsglied und Regelverstärker arbeitet.

**Claims**

1. Method for the automatic adjustment of an optimum working point, which permits the operation of a consumer with maximum efficiency at a voltage source which is in operational connection via a switching controller (SR) with a consumer (V), having the following steps:

- modulation (MO) of the mark-space ratio of the actuation signal for the actuator (SG) of the switching controller (SR) with the timing signal of a clock generator (TG) via alternating positive and negative pulses of a preset length,

- evaluation of the reaction of the switching controller (SR) to this mark-space ratio change forced by the modulation by means of:

a. determination of the differential signal (ΔUA, ΔIA, ΔPA) of the output voltage (UA) of the switching controller and/or of the output current (IA) of the switching controller from a static reference signal by means of a comparison unit (FV),

b. supply of the determined differential signal synchronously for modulation of the mark-space ratio of the actuation signal for the switching controller (SG) alternately inverted and non-inverted to an integrating circuit (R1, C1),

c. regulation of the mark-space ratio of the actuation signal in dependence upon the polarity of the voltage at the integrating circuit (R1, C1), i.e. amplification of the turn-on time for the switching controller (SG) if the voltage at the integrating circuit (R1, C1) is positive and reduction of the turn-on time for the switching controller (SG) if the voltage at the integrating circuit (R1, C1) is negative, until the voltage at the integrating circuit (R1, C1) reaches the value zero and thus the optimum working point is set.

2.  Device for implementation of the method according to claim 1, having the following units:

    -   a comparison unit (FV) for determination of the differential signal (ΔUA, ΔIA, ΔPA),

    -   a control device (ST) for processing an actuation signal for the switching controller-actuator (SG) at a presettable mark-space ratio,

    -   a clock generator (TG) which generates alternating positive and negative pulses of a preset length and which is in operational connection with the control device (ST) in such a manner that the mark-space ratio of the actuation signal can be modulated by the clock generator (TG),

    -   a change-over device (MO), which can be controlled by the output pulses of the clock generator in such a manner that the differential signal (ΔUA, ΔIA, ΔPA) appears alternately inverted and non-inverted at an integrating circuit (IG),

    -   an operational connection from the integrating circuit (IG) to the control device (ST) which enables influencing of the mark-space ratio and/ or of the pulse frequency of an actuation signal for the actuator (SG) in such a fashion that the deviation from the reference value becomes minimal.

3.  Device according to claim 2, **characterised in that** the change-over device (MO) comprises two switches (S1, S2) which are disposed parallel to each other, **in that** the clock generator (TG) is wired on the output-side with a flip-flop (FF), the complementary signal outputs of which are connected to the control inputs of the switches (S1, S2).

4.  Device according to one of the claims 2 or 3, **characterised in that** the control device (ST) contains an oscillator which generates the actuation signal at a presettable mark-space ratio via frequency determining means (R0, C0) and a threshold value circuit, **in that** the frequency determining means (R0, C0) for modulation of the mark-space ratio with the clock generator (TG) and for regulation of this mark-space ratio are connected to the output of the integrating circuit (IG).

5.  Device according to one of the claims 2 to 4, **characterised in that** the change-over device (MO) together with an operational amplifier (Op1), which is connected in sequence, serves as inverter/non-inverter for the differential signal (ΔUA, ΔIA, ΔPA).

6.  Device according to one of the claims 2 to 5, **characterised in that** an operational amplifier (Op2) is provided which is wired in such a manner that it operates simultaneously as integrating circuit and control amplifier.

## Revendications

1.  Procédé de réglage automatique d'un point de fonctionnement optimum permettant le fonctionnement d'un consommateur à la puissance maximale d'une source de tension coopérant par l'intermédiaire d'un régulateur de commutation (SR) avec un consommateur (V), comprenant les étapes suivantes :

    -   modulation (MO) du rapport de travail du signal de commande de l'actionneur (SG) du régulateur de commutation (SR) par le signal de cadence d'un générateur d'horloge (TG), par des impulsions positives et négatives alternées de longueur donnée,

    -   exploitation de la réaction du régulateur de commutation (SR) à cette variation de rapport de travail forcée par la modulation, par :

        a. détermination du signal de différence (ΔUA, ΔIA, ΔPA) de la tension de sortie du régulateur de commutation (UA) et/ou du courant de sortie (IA) du régulateur de commutation par rapport à un signal de référence statique à l'aide d'une unité de comparaison (FV),

        b. application du signal de différence obtenu à un élément d'intégration (R1, C1), en synchronisme inverse et non inverse en alternance, avec la modulation du rapport de travail du signal de commande au régulateur de commutation (SG)

        c. réglage du rapport de travail du signal de commande en fonction de la polarité de la tension sur l'élément d'intégration (R1, C1), c'est-à-dire, augmentation du temps de branchement pour le régulateur de commutation (SG) si la tension de l'élément d'intégration (R1, C1) est positive et réduction du temps de branchement du régulateur de commutation (SG) si la tension sur l'élément d'intégration (R1, C1) est négative, jusqu'à ce que la tension sur l'élément d'intégration (R1, C1) soit nulle et règle ainsi le point de fonctionnement optimum.

2. Installation pour la mise en oeuvre du procédé selon la revendication 1,
comprenant les moyens suivants :

-   une unité de comparaison (FV) pour constater le signal de différence (ΔUA, ΔIA, ΔPA),

-   une installation de commande (ST) pour préparer un signal de commande destiné à l'actionneur du régulateur de commutation (SG) selon un rapport de travail prédéterminé,

-   un générateur d'horloge (TG) qui génère des impulsions positives et négatives alternées, de longueur prédéterminée, et coopère ainsi avec l'installation de commande (ST) pour que le rapport de travail du signal de commande du générateur d'horloge (TG) soit modulé,

-   une installation de commutation (MO) commandée par des impulsions de sortie du générateur d'horloge pour que le signal de différence (ΔUA, ΔIA, ΔPA) soit inversé et non inversé en alternance pour apparaître sur l'élément d'intégration (IG),

-   une coopération de l'élément d'intégration (IG) et de l'installation de commande (ST) qui permet d'agir sur le rapport de travail et/ou de la fréquence impulsionnelle du signal de commande de l'actionneur (SG) pour rendre minimale la déviation par rapport à la valeur de consigne.

3. Installation selon la revendication 2,
**caractérisée en ce que**
l'installation de commutation (MO) se compose de deux commutateurs (S1, S2) en parallèle, le générateur d'horloge (TG) est branché en sortie sur un Flip-Flop (FF) dont les sorties de signaux complémentaires sont reliées aux entrées de commande des commutateurs (S1, S2).

4. Installation selon l'une quelconque des revendications 2 ou 3,
**caractérisée en ce que**

l'installation de commande (ST) comporte un oscillateur qui génère un signal de commande avec un rapport de travail prédéterminé par des moyens déterminant la fréquence (RO, CO) et un circuit à seuil,

les moyens déterminant la fréquence (RO, CO) étant reliés à la sortie de l'élément d'intégration (IG) pour moduler le rapport de travail avec le générateur d'horloge (TG) et pour régler le rapport de travail par la sortie de l'élément d'intégration (IG).

5. Installation selon l'une quelconque des revendications 2 à 4,
**caractérisée en ce que**
l'installation de commutation (MO) constitue avec un amplificateur opérationnel (Op1) branché en chaîne, un inverseur/non inverseur du signal de différence (ΔUA, ΔIA, ΔPA).

6. Installation selon l'une quelconque des revendications 2 à 5,
**caractérisée par**
un amplificateur opérationnel (Op2) branché pour fonctionner en même temps comme élément d'intégration et comme amplificateur de régulation.

Fig. 1

Fig. 2

Fig. 3

Fig. 4

Fig. 5